# EUROPEAN PATENT APPLICATION

(11) **EP 4 421 614 A1**
(43) Date of publication of application: **28.08.2024**
(21) Application number: 23158892.2
(22) Date of filing: 27.02.2023
(51) Int. Cl.: G06F 3/147, H04N 21/4728, G09G 5/08

(54) **DATA PROCESSING DEVICE AND METHOD FOR PROVIDING A VIDEO TO A PASSENGER OF A VEHICLE**

(71) Applicant: Bayerische Motoren Werke Aktiengesellschaft, 80809 München (DE)
(72) Inventor: Zaki, Tarek, 81829 München (DE)

(57) **Abstract**

A data processing device (1) for providing a video to a passenger of a vehicle (10) is provided. The data processing device (1) is configured to receive (S1) a video recorded of an outside of the vehicle (10), provide (S2) the video to a display device (2) arranged at an interior of the vehicle (10), receive (S3) frame information identifying a frame of interest of the provided video selected by the passenger via the display device (2), receive (S4) gaze information from a sensor device (4) arranged at the interior of the vehicle (10), the gaze information identifying a gaze location of the passenger with respect to the display device (2) at a time the frame of interest has been selected by the passenger, and control (S5) the display device (2) to display the video and/or the frame of interest superimposed by a first pointer marking the identified gaze location.

## Description

The present disclosure relates to a data processing device for providing a video to a passenger of a vehicle, a vehicle comprising the data processing device, and/or a method for providing a video to a passenger of a vehicle. Additionally, or alternatively, the present disclosure relates to a computer program and/or a computer-readable medium comprising instructions which, when executed by a computer, cause the computer to at least partially carry out the method.

In vehicles, a purposeful communication between the passengers, such as the driver and one or more other passengers, has been proven to be helpful. For instance, the passengers are confronted with the situation that an object, e.g., a sign or billboard of interest, has been quickly passed, but the passengers haven't had sufficient time to capture the necessary information. As another example, the passengers are unsure whether an exit has been missed.

WO 2022/124164 A1 describes an attention object sharing device, wherein, when an interest reaction by a child is detected based on input data from a child camera and a child sensor, a control unit of a human machine interface identifies an attention object outside a vehicle that a child shows interest in based on the child's line of sight information and an image of a vehicle-external camera at the time of that detection.

DE 600 35 629 T2 describes a vehicle device for temporary and/or permanent recording of sudden events, comprising at least one onboard miniaturized camera having a memory, wherein the camera is adapted to repeatedly record and store images for a prefixed period of time, and to cancel and replace said images thereafter by those taken after a subsequent period of equal duration. Recording and replacing of said images are interrupted only in case of a sudden and/or violent and/or anomalous external event, the interruption taking place either by hand through a switch or automatically following to a signal from a sensor and/or detectors of anomalous behavior of the vehicle.

DE 10 2020 120 663 A1 describes an apparatus to provide accident avoidance information to passengers of autonomous vehicles. The apparatus includes a safety analyzer to determine that an autonomously controlled vehicle is in a safe situation at a first point in time and in a dangerous situation at a second point in time, and a user interface generator to: generate user interface data to define content for a user interface to be displayed via a screen, the user interface to include a graphical representation of the vehicle, the user interface to graphically indicate the vehicle is in the safe situation at the first point in time, and modify the user interface data so that the user interface graphically indicates the vehicle is in the dangerous situation at the second point in time.

S. Trosterer et al.: "Four Eyes See More Than Two: Shared Gaze in the Car", Human-Computer Interaction - INTERACT 2015, Lecture Notes in Computer Science, vol. 9297, pages 331-348, describes an approach that supports successful collaboration of the driver and front-seat passenger with regard to the contextual specifics. By capturing the front-seat passenger's gaze and visualizing it for the driver, a collaborative space for information sharing in the car is created, confirming that the co-driver's gaze can serve as helpful means to support the collaboration of the driver and the front-seat passenger in terms of perceived distraction and workload of the driver.

In view of this prior art, the object of the present disclosure is to disclose a device and/or a method, each of which is suitable for enriching the prior art.

The object is solved by the features of the independent claims. The dependent claims provide optional further implementations of the disclosure.

Accordingly, the object is solved by a data processing device for providing a video to a passenger of a vehicle.

The data processing device is configured to receive a video recorded of an outside of the vehicle and provide the video to a display device arranged at an interior of the vehicle.

The data processing device is configured to receive frame information identifying a frame of interest of the provided video. The frame of interest is selected by the passenger via the display device.

The data processing device is configured to receive gaze information from a sensor device arranged at the interior of the vehicle, the gaze information identifying a gaze location of the passenger with respect to the display device at a time the frame of interest has been selected by the passenger.

The data processing device is configured to control the display device to display the video and/or the frame of interest superimposed by a first pointer marking the identified gaze location.

The data processing device may be part of or represent a control device (or control unit). The data processing device may be part of or represent a driving assistance system. The data processing device may be, e.g., an electronic control unit (ECU). The electronic control unit may be an intelligent processor-controlled unit which can communicate with other modules, e.g., via a central gateway (CGW), and which, if necessary, may form (part of) the vehicle electrical system via field buses such as the CAN bus, LIN bus, MOST bus, FlexRay and/or via the automotive Ethernet, e.g., together with telematics control units and/or an environment sensor system.

It is possible that the data processing device controls functions relevant to the driving behavior of the (motor) vehicle, such as the steering, the engine control, the power transmission, and/or the braking system. In addition, driver assistance systems such as a parking assistant, adaptive cruise control (ACC), lane departure warning, lane change assistant, traffic sign recognition, light signal recognition, approach assistant, night vision assistant, and/or intersection assistant may be controlled by the data processing device.

The display device may be configured to function as a video player. The display device may comprise one or more control units for providing the video player function. The video player may comprise functions to select and play the video. The video player may comprise functions to skip backwards and/or forwards to the frame of interest of the video.

The frame of interest may be selected automatically (e.g., the video may be paused at the frame of interest for more than a predetermined time) and/or manually, e.g., by pressing a button and/or a part of a display of the display device.

The gaze location may be a position on the display (of the display device). The sensor device may be configured to determine a direction between the eyes of the passenger and the display for determining the gaze location.

The video may be recorded and received in a driving mode of the vehicle. In the driving mode, the vehicle may be in motion, an engine of the vehicle may be activated and/or a torque may be transmitted to wheels of the vehicle.

The data processing device described above provides several advantages. Among other things, a technique is provided for a purposeful collaboration of passengers of a vehicle, such as a driver and one or more other passengers. The passengers are able to "travel back by time" by viewing the video recorded of the outside of the vehicle and note necessary and/or helpful information, which have been previously missed while driving, and thus, may contribute to road safety.

Additionally, by selecting the frame of interest and by marking the identified gaze location of the (first) passenger, the search of a specific object is facilitated to speed up a conversation between the (first) passenger, such as the driver, and other passengers, thereby increasing road safety. Advantageously, another passenger can then easily navigate to and see precisely the object in the frame of interest image where the (first) passenger has been actually looking at.

Possible further implementations of the data processing device described herein are explained in detail below.

The data processing device may be further configured to receive second gaze information from the sensor device, the second gaze information identifying a second gaze location of a second passenger with respect to the display device at a time the frame of interest is displayed.

The data processing device may be further configured to control the display device to display the video and/or the frame of interest superimposed by the first pointer and a second pointer marking the identified second gaze location. The first pointer and the second pointer may be distinguishable by different colors, shapes and/or labels.

Advantageously, marking the gaze position of the second passenger (and possibly further passengers) further improves and speeds up a conversation between passengers, thereby increasing road safety.

The second gaze information may be continuously updated while the frame of interest is displayed. The second pointer may be continuously updated to mark the updated second gaze location.

The first pointer, the second pointer and the video superimposed by the first pointer and the second pointer may be real-time synchronized. The data processing device may apply calibrated algorithms to assure that any signal delays are compensated. Advantageously, both pointers and the video may be real-time synchronized to avoid any misleading of the passengers.

The data processing device may be further configured to process an image of the frame of interest to identify content displayed in the image and control the display device to display the frame of interest. The identified content may be displayed traceable and/or selectable in the displayed frame of interest, or shaded or faded out in the displayed frame of interest, if the content has been identified as classified. Classified content may be, e.g., a number plate of another vehicle and/or a face of a pedestrian.

The identified content displayed traceable and/or selectable in the displayed frame of interest may be a telephone number, wherein the telephone number is selectable in the displayed frame of interest for initiating a phone call using the telephone number. The identified content displayed traceable and/or selectable in the displayed frame of interest may be a building, wherein the building is selectable in the displayed frame of interest for retrieving information regarding the building and displaying the retrieved information on the display device. The information may be retrieved from external sources, e.g., via the internet.

The identified content displayed traceable and/or selectable in the displayed frame of interest may be a QR code, wherein the QR code is selectable in the displayed frame of interest for automatically scanning the QR code for further processing. Further processing may be, e.g., automatically performing a payment, opening a website linked to the QR code in a website browser on the display device, and/or downloading an application linked to the QR code.

The identified content displayed traceable and/or selectable in the displayed frame of interest may be an object, wherein the object is selectable in the displayed frame of interest for searching a website containing information regarding the object and opening the searched website in a website browser on the display device. The object may be, e.g., a place of interest and/or a building.

The identified content displayed traceable and/or selectable in the displayed frame of interest may be a street sign and/or an entrance sign of a garage.

The identified content may selectable in the displayed frame of interest by tapping the identified content displayed selectable in the displayed frame of interest on the display device.

The identified content may selectable in the displayed frame of interest by instructing a digital assistant of the vehicle by voice to select the identified content.

The video may be provided to the display device by storing the video in a memory accessible by the display device for a predefined period of time.

The data processing device may be configured to receive the video from a camera device and/or a far field camera device of the vehicle for recording the outside of the vehicle. The far field camera device has, e.g., the advantage that the passenger(s) can see "ahead of time" (additionally, or alternatively, to "travelling back in time") by capturing objects, such as possible hazards, ahead of the vehicle.

The data processing device may be configured to receive the video broadcasted by another vehicle or by satellite, or from an external database.

The foregoing may be summarized in other words and with respect to a possible more specific implementations of the disclosure as described below, wherein the following description is to be construed as not being limiting to the disclosure.

The basic idea of the present disclosure may be to record a video (outside of the vehicle) for a specific certain period of time and make this "historical" data accessible on in-vehicle entertainment systems (e.g., front passenger display, rear-seat displays). Furthermore, image processing of the frames of interest may be performed for the users, and accordingly, this information may be made tappable on a touchscreen (e.g., to copy a number or to open an internet browser). Moreover, the images may be overlapped with a pointer depicting the gaze location of each user.

The vehicle may be equipped with exterior cameras that are connected to an internal processing unit, such as the data processing device, and a storage memory inside the vehicle. The vehicle may always store the captured images (video) for a specific period of historical time. The recorded video/information may be accessible to all in-vehicle displays and devices, even if each device has its own ECU (Electronic Control Unit). The devices may also be extended to personally connected gadgets, such as smartphone or smart glasses.

Using a video player on the device, the user may navigate backwards and/or forward to the frame of interest. Either automatically or manually by pressing on a button or part of the image, this image (i.e., the frame of interest) may be processed by the vehicle to make the content on this image traceable and/or show further information to an object, a person etc..

For example, the user may navigate to an image of a billboard. The processing unit may make the telephone number noted on the billboard tappable to initiate a phone call from the vehicle.

The user may navigate to a facade of a famous building. The processing unit may display further information about this place and maybe even provide traceable links to open the website or bookings.

The user may navigate to a street sign to make sure that the vehicle is on the right route, or to check that the vehicle is still following the required speed limit, or for other purposes.

The user may navigate to the entrance sign of a garage to know the fares and, e.g., with the help of a QR code may make a quick online payment.

To ensure privacy and no personal data breach, the system may shade away specifically classified items, such as number plates of other cars, faces of pedestrians.

Facilitating the search of a specific object may speed up the conversation between a driver and a passenger, and thereby, increase road safety. The stored video may be overlapped with time-synchronized location of all vehicle occupant's gazes. The owners of these gazes may be easily distinguishable by a reader, e.g., by different color pointers, overlapping a profile picture or even by just labelling the gaze pointers (driver, front passenger, left/right rear passenger). This way, e.g., when a driver suddenly says to a passenger "Have you seen that ad? Seems interesting.", the passenger may then easily navigate to the image and see precisely where the driver was actually looking. It may be important that both gaze pointers and video are real-time synchronized not to mislead the user. Therefore, it may be helpful if both algorithms are calibrated to make sure that any signal delay is compensated.

Similar to the usefulness of traveling back with time, it may be helpful to give passengers, such as a co-driver, the capability to see ahead of time for identifying, e.g., road hazards, imminent difficult maneuvers or important street signs. Equipping the vehicle with far-field cameras may help the co-driver capturing imminent objects by zooming in. Other possibilities may be broadcasting information recorded from other cars, by satellite and/or showing, from a stored database, e.g., soon approaching street signs on the map displayed to the co-driver.

Furthermore, a vehicle is provided. The vehicle comprises the data processing device described herein, the display device arranged at the interior of the vehicle, and the sensor device arranged at the interior of the vehicle.

The vehicle may be a motor vehicle. The vehicle may be a passenger car, especially an automobile, or a commercial vehicle, such as a truck.

The display device may comprise one or more displays, optionally touchscreens. The one or more display may be fixedly arranged at the interior of the vehicle. The display device may comprise a smartphone and/or smart glasses.

The sensor device may be configured to identify the gaze location (of the passenger with respect to the display device at a time the frame of interest has been selected by the passenger). The sensor device may be configured to identify the second gaze location (of a second passenger with respect to the display device at a time the frame of interest is displayed).

The vehicle may comprise a camera device, optionally a far field camera device, for recording the outside of the vehicle. The camera device may be (also) used for autonomous driving.

The camera device may comprise multiple cameras and/or far field cameras. The camera device and/or the multiple cameras may be arranged at an exterior of the vehicle.

What is described herein with respect to the data processing device also applies analogously to the vehicle and vice versa.

Furthermore, a method for providing a video to a passenger of a vehicle is provided.

The method comprises receiving a video recorded of an outside of the vehicle and providing the video to a display device arranged at an interior of the vehicle.

The method comprises receiving frame information identifying a frame of interest of the provided video selected by the passenger via the display device.

The method comprises receiving gaze information from a sensor device arranged at the interior of the vehicle, the gaze information identifying a gaze location of the passenger with respect to the display device at a time the frame of interest has been selected by the passenger.

The method comprises controlling the display device to display the video and/or the frame of interest superimposed by a first pointer marking the identified gaze location.

The method may be a computer-implemented method, i.e., one, several or all steps of the method may be executed at least partially by a computer or a device for data processing, optionally the data processing device.

What is described herein with respect to the data processing device and the vehicle applies analogously to the method and vice versa.

Furthermore, a computer program is provided. A computer program comprises instructions which, when the computer program is executed by a computer, cause the computer to at least partially execute the method described herein.

A program code of the computer program may be in any code, especially in a code suitable for control systems of motor vehicles.

What is described herein with respect to the data processing device, the vehicle and the method applies analogously to the computer program and vice versa.

Furthermore, a computer-readable medium, in particular a computer-readable storage medium, is provided. The computer-readable medium comprises instructions which, when the instructions are executed by a computer, cause the computer to at least partially execute or perform the method described herein.

Thus, a computer-readable medium comprising a computer program as defined herein may be provided. The computer-readable medium may be any digital data storage device, such as a USB flash drive, a hard disk, a CD-ROM, an SD card, or an SSD card (or SSD drive/SSD hard disk).

The computer program does not necessarily have to be stored on such a computer-readable storage medium in order to be made available to the vehicle, but may also be obtained externally via the Internet or otherwise.

What is described herein with respect to the method, the data processing device, the computer program and the vehicle also applies analogously to the computer-readable medium and vice versa.

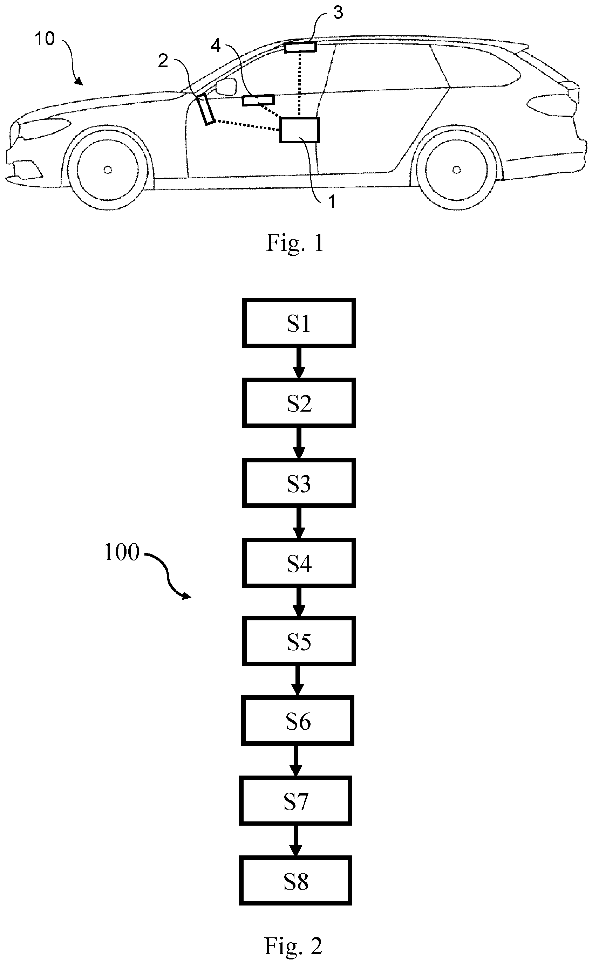

Optional embodiments are described below with reference to Figs. 1 and 2.
- Fig. 1: shows a schematic overview of a vehicle according to an embodiment of the disclosure; and
- Fig. 2: shows a schematic flow diagram of a method according to an embodiment of the disclosure.

The vehicle 10, which is only schematically shown in Fig. 1, comprises the data processing device 1, the display device 2, the camera device 3 and the sensor device 4.

The display device 2 and the sensor device 4 are arranged at the interior of the vehicle 10. The camera device 3 is configured to record the outside of the vehicle 10 and may be, e.g., arranged at an exterior of the vehicle 10.

The data processing device 1 is configured to communicate and/or exchange signals with the display device 2, the camera device 3 and the sensor device 4.

The data processing device 1 is configured to provide a video to a passenger (or passengers) of the vehicle 10. In order to do so, the data processing device 1 is designed to execute the method described below in detail with reference to Fig. 2.

In a first step S1 and a second step S2, a video recorded of an outside of the vehicle 10 is received and the video is provided to the display device 2.

The video may be received from the camera device 3 which may a far field camera device. Alternatively, the video may be received broadcasted by another vehicle or by satellite, or from an external database.

The video may be provided to the display device 2 by storing the video in a memory accessible by the display device 2 for a predefined period of time.

In a third step S3, frame information identifying a frame of interest of the provided video selected by the passenger via the display device 2 is received.

In a fourth step S4, gaze information is received from the sensor device 4, the gaze information identifying a gaze location of the passenger with respect to the display device 2 at a time the frame of interest has been selected by the passenger.

In a fifth step S5, the display device 2 is controlled to display the video and/or the frame of interest superimposed by a first pointer marking the identified gaze location.

In a sixth step S6, second gaze information may be received from the sensor device 4, the second gaze information identifying a second gaze location of a second passenger with respect to the display device 2 at a time the frame of interest is displayed.

In a seventh step S7, the display device 2 may be controlled to display the video and/or the frame of interest superimposed by the first pointer and a second pointer marking the identified second gaze location. The first pointer and the second pointer may be distinguishable by different colors, shapes and/or labels.

The first pointer, the second pointer and the video superimposed by the first pointer and the second pointer may be real-time synchronized.

In an eighth step S8, an image of the frame of interest may be processed to identify content displayed in the image and the display device 2 may be controlled to display the frame of interest.

The identified content may be displayed traceable and/or selectable in the displayed frame of interest. Alternatively, the identified content may be shaded or faded out in the displayed frame of interest, if the content has been identified as classified.

For instance, the identified content may selectable in the displayed frame of interest by tapping the identified content displayed selectable in the displayed frame of interest on the display device 2, and/or by instructing a digital assistant of the vehicle by voice to select the identified content.

### List of reference signs

- 1: data processing device
- 2: display device
- 3: camera device
- 4: sensor device

- 100: method
- S1-S7: method steps

## Claims

1. Data processing device (1) for providing a video to a passenger of a vehicle (10), **characterized in that** the data processing device (1) is configured to:
- receive (S1) a video recorded of an outside of the vehicle (10);
- provide (S2) the video to a display device (2) arranged at an interior of the vehicle (10);
- receive (S3) frame information identifying a frame of interest of the provided video selected by the passenger via the display device (2);
- receive (S4) gaze information from a sensor device (4) arranged at the interior of the vehicle (10), the gaze information identifying a gaze location of the passenger with respect to the display device (2) at a time the frame of interest has been selected by the passenger; and
- control (S5) the display device (2) to display the video and/or the frame of interest superimposed by a first pointer marking the identified gaze location.

2. Data processing device (1) according to claim 1, **characterized in that** the data processing device (1) is further configured to:
- receive (S6) second gaze information from the sensor device (4), the second gaze information identifying a second gaze location of a second passenger with respect to the display device (2) at a time the frame of interest is displayed; and
- control (S7) the display device (2) to display the video and/or the frame of interest superimposed by the first pointer and a second pointer marking the identified second gaze location, wherein the first pointer and the second pointer are distinguishable by different colors, shapes and/or labels.

3. Data processing device (1) according to claim 2, **characterized in that** the first pointer, the second pointer and the video superimposed by the first pointer and the second pointer are real-time synchronized.

4. Data processing device (1) according any of the preceding claims, **characterized in that** the data processing device (1) is further configured to:
- process an image of the frame of interest to identify content displayed in the image; and
- control (S8) the display device (2) to display the frame of interest, wherein the identified content is
- displayed traceable and/or selectable in the displayed frame of interest, or
- shaded or faded out in the displayed frame of interest, if the content has been identified as classified.

5. Data processing device (1) according to claim 4, **characterized in that** the identified content displayed traceable and/or selectable in the displayed frame of interest is:
- a telephone number, wherein the telephone number is selectable in the displayed frame of interest for initiating a phone call using the telephone number;
- a building, wherein the building is selectable in the displayed frame of interest for retrieving information regarding the building and displaying the retrieved information on the display device (2);
- a QR code, wherein the QR code is selectable in the displayed frame of interest for automatically scanning the QR code for further processing;
- an object, wherein the object is selectable in the displayed frame of interest for searching a website containing information regarding the object and opening the searched website in a website browser on the display device (2);- a street sign; and/or
- an entrance sign of a garage.

6. Data processing device (1) according to claim 4 or 5, **characterized in that** the identified content is selectable in the displayed frame of interest by:
- tapping the identified content displayed selectable in the displayed frame of interest on the display device (2); and/or
- instructing a digital assistant of the vehicle by voice to select the identified content.

7. Data processing device (1) according any of the preceding claims, **characterized in that** the data processing device (1) is configured to receive the video
- from a camera device (3), optionally a far field camera device, of the vehicle (10) for recording the outside of the vehicle (10);
- broadcasted by another vehicle or by satellite; or
- from an external database.

8. Vehicle (10), **characterized in that** the vehicle (10) comprises
- the data processing device (1) according any of claims 1 to 7;
- the display device (2) arranged at the interior of the vehicle (10); and
- the sensor device (4) arranged at the interior of the vehicle (10).

9. Method (100) for providing a video to a passenger of a vehicle (10), **characterized in that** the method (100) comprises:
- receiving (S1) a video recorded of an outside of the vehicle (10);
- providing (S2) the video to a display device (2) arranged at an interior of the vehicle (10);
- receiving (S3) frame information identifying a frame of interest of the provided video selected by the passenger via the display device (2);
- receiving (S4) gaze information from a sensor device (4) arranged at the interior of the vehicle (10), the gaze information identifying a gaze location of the passenger with respect to the display device (2) at a time the frame of interest has been selected by the passenger; and
- controlling (S5) the display device (2) to display the video and/or the frame of interest superimposed by a first pointer marking the identified gaze location.

10. A computer program and/or a computer-readable medium comprising instructions which, when executed by a computer, cause the computer to carry out the method (100) according claim 9.
